# EUROPÄISCHE PATENTSCHRIFT

(11) **EP 3 228 879 B1**
(45) Veröffentlichungstag und Bekanntmachung des Hinweises auf die Patenterteilung: **06.02.2019**
(21) Anmeldenummer: 17162506.4
(22) Anmeldetag: 23.03.2017
(51) Int. Cl.: F16B 5/01, F16B 12/14

(54) **VERBINDUNGSBESCHLAG, ANORDNUNG UND VERFAHREN ZUM VERBINDEN VON ZWEI LEICHTBAUPLATTEN**
CONNECTION FITTING, ASSEMBLY AND METHOD FOR BONDING TWO LIGHTWEIGHT BUILDING ELEMENTS
FERRURE D'ASSEMBLAGE, SYSTÈME ET PROCÉDÉ D'ASSEMBLAGE DE DEUX PANNEAUX DE CONSTRUCTION LÉGERS

(30) Priorität: 08.04.2016 DE 102016205952
(43) Veröffentlichungstag der Anmeldung: 11.10.2017
(73) Patentinhaber: Adolf Würth GmbH & Co. KG, 74653 Künzelsau (DE); Würth International AG, 7000 Chur (CH)
(72) Erfinder: Wieland, Achim, 74211 Leingarten (DE)
(74) Vertreter: Patentanwälte Ruff, Wilhelm, Beier, Dauster & Partner mbB

(56) Entgegenhaltungen:
- EP-A1- 2 202 050
- DE-A1- 2 611 884
- DE-A1-102009 044 210
- DE-U1- 8 504 459

## Beschreibung

Die Erfindung betrifft einen Verbindungsbeschlag zum Verbinden von zwei senkrecht zueinander angeordneten Leichtbauplatten, wobei eine Leichtbauplatte eine erste Deckplatte und eine zweite Deckplatte aus kompaktem, drucksteifem Material und einen zwischen den Deckplatten angeordneten Kern aus Material mit gegenüber den Deckplatten geringer Dichte aufweist, insbesondere Papierwaben oder Schaumstoff, mit einem ersten topfartigen Beschlagteil und einem zweiten topfartigen Beschlagteil, wobei das erste Beschlagteil und das zweite Beschlagteil zum Einsetzen in jeweils eine Sacklochbohrung in den Leichtbauplatten vorgesehen sind, wobei die Sacklochbohrungen jeweils nur die erste Deckplatte und den Kern vollständig durchsetzen. Die Erfindung betrifft auch eine Anordnung mit zwei Leichtbauplatten und wenigstens einem erfindungsgemäßen Verbindungsbeschlag. Die Erfindung betrifft weiter ein Verfahren zum Verbinden von zwei Leichtbauplatten unter Verwendung wenigstens eines erfindungsgemäßen Verbindungsbeschlags.

Leichtbauplatten weisen eine erste Deckplatte und eine zweite Deckplatte aus kompaktem, drucksteifem Material und einen zwischen den Deckplatten angeordneten Kern aus Material mit gegenüber den Deckplatten geringer Dichte auf. Der Kern kann beispielsweise aus Papierwaben oder auch aus Schaumstoff bestehen. Die Verbindung von zwei senkrecht zueinander angeordneten Leichtbauplatten ist problematisch. Insbesondere können übliche Verbindungsbeschläge, die für übliche Holzwerkstoffe wie beispielsweise Pressspan, MDF-Platten (mitteldichte Faser) oder auch Massivholz entwickelt wurden, in Leichtbauplatten keinen ausreichenden Halt finden.

Aus der deutschen Offenlegungsschrift DE 26 11 884 A1 geht eine Verbindungskonstruktion zum lösbaren Verbinden zweier Werkstücke, insbesondere ein topfförmiger Verbindungsbeschlag für plattenförmige Möbelteile, hervor. Dazu weist die Verbindungskonstruktion ein in einer Aussparung eines Werkstücks befestigbares erstes Verbindungsteil und ein in einer Aussparung eines anderen Werkstücks befestigbares zweites Verbindungsteil auf. Die Verbindungsteile lassen sich dabei so an den zu verbindenden Seitenkanten der Werkstücke anordnen, dass eine Oberseite der Verbindungsteile über einen Großteil ihres Umfangs von der Oberfläche der zu verbindenden Werkstücke umgeben wird. Des Weiteren ist zur Verbindung der beiden Verbindungsteile ein Verriegelungselement vorgesehen, das von dem einen Verbindungsteil bewegbar gehalten und mit dem anderen Verbindungsteil in Eingriff gebracht wird. Es ist eine Ausführung gezeigt, bei der das eine Verbindungsteil eine Nase aufweist, die sich an den Schraubkanal anschließt und den Schraubkanal in Umfangsrichtung für einen Winkel von maximal 180° umgibt. Diese Nase erlaubt eine grobe Positionierung des einen Verbindungsteils in einer Aussparung des anderen Verbindungsteils.

Die deutsche Offenlegungsschrift DE 10 2009 044 210 A1 zeigt einen Dübel und ein Verfahren zur Montage eines Dübels in einer Leichtbauplatte. Dieser Dübel besteht aus einem Thermoplast. Er ist zum Einsetzen in eine Leichtbauplatte bestimmt, die eine erste und eine zweite Deckplatte sowie einen dazwischen liegenden Kern aufweist. Im montierten Zustand durchtritt der Dübel die eine Deckplatte und den Kern und liegt mit seiner Stirnseite auf der Innenseite der gegenüberliegenden Deckplatte auf. An der Stirnseite finden sich kegelförmige Energierichtungsgeber, die beim Einbringen von Energie, insbesondere beim Beaufschlagen von Ultraschall, aufgeschmolzen werden, so dass sich der Dübel mit seiner Stirnseite mit der Innenseite der zweiten Deckplatte der Leichtbauplatte verbinden lässt.

Aus dem deutschen Gebrauchsmuster DE 8504459 U1 ist ein Verbindungsbeschlag zum Verbinden zweier senkrecht zueinander stehender Möbelplatten bekannt. Der Verbindungsbeschlag weist zwei topfartige Beschlagteile auf, die in jeweils eine der Möbelplatten oberflächenbündig eingesetzt werden und die dann mittels einer Schraube miteinander verbunden werden, wobei ein erster Abschnitt eines Schraubkanals in dem ersten Beschlagteil und ein zweiter Abschnitt des Schraubkanals in dem zweiten Beschlagteil angeordnet ist. Das erste Beschlagteil erstreckt sich bis zur Seitenkante der zugeordneten Möbelplatte und weist zusätzlich einen sich von der Seitenkante entlang der Möbelplatte erstreckenden Verankerungsfortsatz auf, der mit einem weiteren topfartigen Verankerungselement in der Möbelplatte befestigt ist. Das erste Beschlagteil erstreckt sich mit zwei parallel zueinander angeordneten leistenförmigen Vorsprüngen über die Seitenkante der zugeordneten Möbelplatte hinaus, die beim Verbinden der beiden Beschlagteile in passende Ausnehmungen des zweiten Beschlagteils eingreifen können. Durch Eindrehen einer Befestigungsschraube kann, in Abhängigkeit der Dimensionierung der Bohrung, eine Deformation erreicht werden, die zur Klemmung der beiden Führungszapfen führt. Die beiden Beschlagteile werden in Sacklöcher in den jeweiligen Möbelplatten eingesetzt, wobei die Befestigung der Beschlagteile in den Möbelplatten mittels Einschlagen und damit letztendlich mittels eines Presssitzes der Beschlagteile in den Möbelplatten erfolgt. Die Beschlagteile sind einstückig aus Kunststoff hergestellt.

Die europäische Patentanmeldung EP 2 202 050 A1 offenbart ein Verfahren zum Verankern eines Verbinders in einem Leichtbauelement sowie den Verbinder. Das Leichtbauelement weist zwei Deckplatten auf, zwischen denen ein Kern mit geringerer Dichte angeordnet ist. Der an seinen Auflageflächen aus einem thermoplastischen Material bestehende Verbinder wird in ein Sackloch in der Leichtbauplatte so eingeführt, dass er stirnseitig auf der Innenseite der gegenüberliegenden Deckplatte aufsteht. Der Verbinder umfasst ein Hülsenelement und ein Kolbenelement, wobei das Kolbenelement mit seinem Schaft durch das Hülsenelement geschoben wird. Über das Kolbenelement lassen sich mechanische Schwingungen einkoppeln und somit die thermoplastischen Bereiche des Verbinders mit der Deckplatte oder den Deckplatten verbinden.

Mit der Erfindung sollen ein Verbindungsbeschlag, eine Anordnung mit zwei Leichtbauplatten und wenigstens einem Verbindungsbeschlag sowie ein Verfahren zum Verbinden von zwei Leichtbauplatten verbessert werden.

Die der Erfindung zugrunde liegende Aufgabe wird durch einen Verbindungsbeschlag mit den Merkmalen von Anspruch 1, eine Anordnung mit zwei Leichtbauplatten und wenigstens einem Verbindungsbeschlag mit den Merkmalen von Anspruch 10 sowie ein Verfahren zum Verbinden von zwei Leichtbauplatten mit den Merkmalen von Anspruch 12 gelöst. Vorteilhafte Weiterbildungen der Erfindung sind in den Unteransprüchen angegeben.

Der erfindungsgemäße Verbindungsbeschlag zum Verbinden von zwei senkrecht zueinander angeordneten Leichtbauplatten, wobei eine Leichtbauplatte eine erste Deckplatte und eine zweite Deckplatte aus kompaktem, drucksteifem Material und einen zwischen den Deckplatten angeordneten Kern aus Material mit gegenüber den Deckplatten geringer Dichte aufweist, insbesondere Papierwaben oder Schaumstoff, weist ein erstes topfartiges Beschlagteil und ein zweites topfartiges Beschlagteil auf, wobei das erste Beschlagteil und das zweite Beschlagteil zum Einsetzen in jeweils eine Sacklochbohrung in den Leichtbauplatten vorgesehen sind, wobei die Sacklochbohrungen jeweils nur die erste Deckplatte und den Kern vollständig durchsetzen, wobei jedes Beschlagteil an seiner im eingebauten Zustand an dem Boden des Sacklochs anliegenden Unterseite mindestens einen Vorsprung aufweist, der aus aufschmelzbarem Kunststoff besteht, so dass der Vorsprung bei einer Ultraschallbeaufschlagung teilweise aufschmilzt und sich mit dem Material der zweiten Deckplatte am Boden des Sacklochs verbindet, und dass das erste Beschlagteil und das zweite Beschlagteil jeweils ausgebildet sind, in einem Abstand von einer jeweiligen näherliegenden Seitenkante der zugeordneten Leichtbauplatte angeordnet zu werden, so dass eine Oberseite eines Grundkörpers des ersten Beschlagteils und eine Oberseite des zweiten Beschlagteils über einen Winkel von mehr als 200°, insbesondere mehr als 300°, von der ersten Deckplatte der jeweils zugeordneten Leichtbauplatte umgeben sind.

Indem jedes Beschlagteil an seiner Unterseite mindestens einen Vorsprung aus unter Ultraschallbeaufschlagung aufschmelzbarem Kunststoff aufweist, kann jedes Beschlagteil mit seiner Unterseite an der zweiten Deckplatte verankert werden. Dadurch wird bereits ein vergleichsweise fester Halt des jeweiligen Beschlagteils erreicht. Ein oberer Abschnitt des jeweiligen Beschlagteils wird dann an der ersten Deckplatte, insbesondere formschlüssig, abgestützt. Die Beschlagteile sind dann jeweils an der zweiten Deckplatte und an der ersten Deckplatte verankert, die ja um die Dicke des Kerns voneinander beabstandet sind. Dadurch kann eine stabile Verankerung der beiden Beschlagteile in der jeweiligen Leichtbauplatte erreicht werden. Durch Ultraschallbeaufschlagung des ersten und/oder des zweiten Beschlagteils wird der jeweilige Vorsprung oder die jeweiligen Vorsprünge erhitzt, so dass diese letztendlich aufschmelzen und sich mit dem Material der zweiten Deckplatte der Leichtbauplatte verbinden. Eine Verbindung kann dabei dadurch erfolgen, dass der Kunststoff des Vorsprungs im geschmolzenen Zustand ein Stück weit in das Material der zweiten Deckplatte eindringt, so dass sich das Kunststoffmaterial und das Material der zweiten Deckplatte ineinander verzahnen. Darüber hinaus kann auch eine stoffschlüssige Verbindung zwischen dem Kunststoffmaterial und dem Material der zweiten Deckplatte ausgebildet werden. Darüber hinaus werden die beiden Beschlagteile so angeordnet, dass sich ein Formschluss zwischen der jeweiligen ersten Deckplatte und dem ersten bzw. dem zweiten Beschlagteil ergibt. Dies wird dadurch erreicht, dass sich die Berandung der Sacklöcher, die für das erste Beschlagteil bzw. das zweite Beschlagteil gebohrt werden, eine Oberseite des ersten Beschlagteils bzw. eine Oberseite des zweiten Beschlagteils über einen Winkel von mehr als 200° umgeben. Das erste Beschlagteil und das zweite Beschlagteil sind dadurch noch mittels eines Formschlusses in der jeweiligen ersten Deckplatte gesichert.

In Weiterbildung der Erfindung sind an der Unterseite wenigstens eines der Beschlagteile mehrere voneinander beabstandete Vorsprünge vorgesehen.

Durch mehrere, kurze Vorsprünge kann eine Verbindung der Beschlagteile mit der jeweiligen zweiten Deckplatte verbessert werden.

In Weiterbildung der Erfindung ist an der Unterseite wenigstens eines der Beschlagteile eine kreisförmige Kante vorgesehen, die durch Ausnehmungen unterbrochen ist und die mehrere Vorsprünge bildet.

Auf diese Weise kann eine sägezahnartige Struktur mit mehreren Vorsprüngen gebildet werden, die sich dann mit der zweiten Deckplatte verbinden und das jeweilige Beschlagteil sicher verankern.

In Weiterbildung der Erfindung ist ein Rand wenigstens eines der Beschlagteile, der um eine Oberseite des Beschlagteils umläuft, wobei die Oberseite des Beschlagteils im eingebauten Zustand bündig mit einer Oberseite der ersten Deckplatte der Leichtbauplatte verläuft, senkrecht zur Oberseite des Beschlagteils angeordnet und mit einer Riffelung versehen.

Indem der Rand senkrecht zur Oberseite des Beschlagteils angeordnet und mit einer Riffelung versehen ist, kann der Rand senkrecht zur ersten Deckplatte in die Sacklochbohrung der Leichtbauplatte eingedrückt werden. Im vollständig eingedrückten Zustand, wenn die Oberseite des Beschlagteils bündig mit der Oberseite der ersten Deckplatte verläuft, sorgt die Riffelung des Rands für eine sichere Verankerung des Beschlagteils an der ersten Leichtbauplatte. Mittels einer Ultraschallbeaufschlagung kann die Riffelung wenigstens teilweise aufgeschmolzen werden, wodurch eine Verbindung mit dem Material der ersten Deckplatte hergestellt werden kann.

In Weiterbildung der Erfindung weist das erste Beschlagteil einen kreiszylindrischen Grundkörper und einen von dem Grundkörper ausgehenden Fortsatz auf, wobei der Fortsatz einen Abschnitt eines Kreiszylinders bildet.

Auf diese Weise kann ein Sackloch zum Anordnen des ersten Beschlagteils in einfacher Weise durch zwei Sacklöcher mit kreisrundem Querschnitt hergestellt werden. Zweckmäßigerweise wird ein erstes Sackloch mit großem Durchmesser in Abstand von der jeweiligen näheren Seitenkante der Leichtbauplatte hergestellt. Ein zweites Sackloch mit kleinerem Durchmesser wird dann so angeordnet, dass es einerseits die Seitenkante der Leichtbauplatte und andererseits die Umfangswand des ersten, größeren Sacklochs schneidet.

Gemäß der Erfindung weist das erste Beschlagteil einen Schraubkanal für eine Verbindungsschraube und einen den Schraubkanal in axialer Richtung abschnittweise und in radialer Richtung vollständig umgebenden Führungszapfen auf, der sich ausgehend von einem kreiszylinderförmigen Grundkörper des ersten Beschlagteils nach außen erstreckt.

Mittels eines solchen Führungszapfens kann eine zuverlässige Positionierung des ersten Beschlagteils zum zweiten Beschlagteil und im eingebauten Zustand somit eine exakte Positionierung der beiden Leichtbauplatten zueinander erzielt werden. Indem der Führungszapfen den Schraubkanal umgibt, ist zum einen eine exakte Ausrichtung des Schraubkanals gewährleistet. Darüber hinaus kann der Schraubkanal so bemessen sein, dass er sich beim Eindrehen der Schraube aufweitet. Dadurch kann sich gegebenenfalls auch der Führungszapfen leicht aufweiten, so dass sich auch ein Reibschluss zwischen dem Führungszapfen und der zugeordneten Wandung des anderen Beschlagteils ergibt. Dadurch wird eine äußerst zuverlässige Fixierung der Beschlagteile bzw. der Leichtbauplatten aneinander erreicht.

In Weiterbildung der Erfindung verläuft der Schraubkanal schräg zu einer Oberseite des ersten Beschlagteils und der den Schraubkanal abschnittsweise umgebende Führungszapfen verläuft parallel zur Oberseite des ersten Beschlagteils.

Auf diese Weise können die beiden Leichtbauplatten senkrecht zueinander angeordnet und durch eine einfache translatorische Bewegung, beispielsweise auf der Oberfläche einer Werkbank, aneinander angesetzt werden. Dabei kann der parallel zur Oberseite des ersten Beschlagteils verlaufende Führungszapfen in die passende Ausnehmung des zweiten Beschlagteils eingeführt werden. Sobald der Führungszapfen des ersten Beschlagteils in das zweite Beschlagteil eingreift, sind die beiden Leichtbauplatten exakt zueinander positioniert. Das Einschrauben der Schraube in den Schraubkanal sorgt dann nur noch für eine Fixierung dieser vorgegebenen, exakt ausgerichteten Position.

In Weiterbildung der Erfindung hat der Führungszapfen eine kreiszylindrische Form.

Eine kreiszylindrische Form des Führungszapfens ist insbesondere dann vorteilhaft, wenn das zweite Beschlagteil, das die zu dem Führungszapfen passende Ausnehmung aufweist, rotationssymmetrisch ist oder zumindest in unterschiedlichen Winkellagen um seine Längsachse eingebaut werden kann. Die Winkellage des zweiten Beschlagteils im eingebauten Zustand um seine Längsachse relativ zu einer Seitenkante der Leichtbauplatte spielt dann keine Rolle.

Gemäß der Erfindung weist das zweite Beschlagteil an seiner Oberseite eine Ausnehmung auf, die passend zu dem Führungszapfen ausgebildet ist.

In Weiterbildung der Erfindung ist ausgehend von der Ausnehmung an der Oberseite des zweiten Beschlagteils der Schraubkanal des zweiten Beschlagteils angeordnet.

In Weiterbildung der Erfindung bestehen die beiden Beschlagteile vollständig aus aufschmelzbarem Kunststoff.

Auf diese Weise ist es möglich, die Beschlagteile jeweils auch dadurch in der jeweiligen Leichtbauplatte zu fixieren, dass die Beschlagteile in ihren Randbereichen, mit denen sie an den Deckplatten und/oder dem Kern anliegen, zuverlässig verankert werden. Eine solche Verankerung durch Aufschmelzen des Materials der Beschlagteile kann dadurch erfolgen, dass das Material der Beschlagteile ein Stück weit in das Material der Leichtbauplatte eindringt und sich dadurch mit dem Material der Leichtbauplatte verzahnt. Eine Verankerung kann beispielsweise aber auch dadurch erfolgen, dass eine stoffschlüssige Verbindung, also nach Art einer Klebung, zwischen dem Material der Leichtbauplatte und den Beschlagteilen erzielt wird. Ein Aufschmelzen des Kunststoffs kann durch Ultraschallbeaufschlagung erzielt werden.

Die Erfindung betrifft auch eine Anordnung mit zwei Leichtbauplatten und wenigstens einem erfindungsgemäßen Verbindungsbeschlag, wobei die beiden Beschlagteile mit einer Schraube miteinander verbunden sind, wobei ein kreiszylinderförmiger Grundkörper des ersten Beschlagteils und das zweite Beschlagteil jeweils in einem Abstand von einer jeweiligen näher liegenden Seitenkante der zugeordneten Leichtbauplatte angeordnet sind, so dass eine Oberseite des Grundkörpers des ersten Beschlagteils und eine Oberseite des zweiten Beschlagteils über einen Winkel von mehr als 200°, insbesondere mehr als 300°, insbesondere mehr als 340°, von der ersten Deckplatte der jeweils zugeordneten Leichtbauplatte umgeben ist, und wobei der wenigstens eine an den Boden des Sacklochs anliegende Vorsprung des ersten Beschlagteils und/oder des zweiten Beschlagteils wenigstens teilweise aufgeschmolzen und mit dem Material der zweiten Deckplatte verbunden ist.

Mittels einer Schraube kann eine sehr feste und dabei lösbare Verbindung zwischen den beiden Leichtbauplatten erreicht werden.

Die Oberseite des ersten und des zweiten Beschlagteils wird wenigstens abschnittsweise so von der ersten Deckplatte der jeweiligen Leichtbauplatte umschlossen, dass eine formschlüssige Verbindung zwischen der jeweiligen ersten Leichtbauplatte und dem jeweiligen Beschlagteil gegen eine Bewegung parallel zur ersten Deckplatte gegeben ist. Auch dies sorgt für einen sehr sicheren Halt der Beschlagteile in der Leichtbauplatte. Das zweite Beschlagteil ist an seiner Oberseite beispielsweise vollständig von der ersten Leichtbauplatte umschlossen. Dadurch wird ein sehr sicherer Halt des zweiten Beschlagteils erreicht, das im Wesentlichen nur noch gegen Zugkräfte senkrecht zur ersten Deckplatte gesichert werden muss. Das erste Beschlagteil kann an seiner Oberseite ebenfalls vollständig von der ersten Deckplatte umschlossen sein. Es kann sinnvoll sein, dass sich das erste Beschlagteil bis zu einer näheren Seitenkante der ersten Deckplatte erstreckt. In diesem Fall wird aber dafür Sorge getragen, dass die Oberseite des ersten Beschlagteils über einen Winkel von mehr als 200°, insbesondere mehr als 300°, von der ersten Deckplatte umgeben ist, so dass auch auf diese Weise ein Formschluss zwischen dem ersten Beschlagteil und der ersten Deckplatte gegen Kräfte parallel zur ersten Deckplatte gewährleistet ist.

Indem wenigstens ein Vorsprung des ersten Beschlagteils und/oder des zweiten Beschlagteils wenigstens teilweise aufgeschmolzen und mit dem Material der zweiten Deckplatte verbunden ist, kann auch eine sehr sichere Verankerung der Beschlagteile mit dem Material der zweiten Deckplatte gewährleistet werden.

In Weiterbildung der Erfindung weist wenigstens eines der Beschlagteile einen um eine Oberseite des Beschlagteils umlaufenden Rand auf, wobei die Oberseite des Beschlagteils im eingebauten Zustand bündig mit einer Oberseite der ersten Deckplatte der Leichtbauplatte verläuft, wobei der Rand senkrecht zur Oberseite des Beschlagteils angeordnet und mit einer Riffelung versehen ist und wobei die Riffelung wenigstens teilweise aufgeschmolzen und mit dem Material der jeweiligen ersten Deckplatte verbunden ist.

Auf diese Weise kann neben dem Formschluss der Beschlagteile mit dem Material der jeweiligen ersten Deckplatte eine zusätzliche Sicherung an der ersten Deckplatte erfolgen. Das wenigstens teilweise Aufschmelzen der Riffelung kann zu einer Verzahnung des geschmolzenen Kunststoffs mit dem Material der ersten Deckplatte und/oder zu einer stoffschlüssigen Verbindung mit dem Material der ersten Deckplatte führen.

Gemäß der Erfindung ist auch ein Verfahren zum Verbinden von zwei Leichtbauplatten mit den Schritten des Einbringens von jeweils einer Sacklochbohrung in jede der Leichtbauplatten, wobei die Sacklochbohrungen senkrecht zu einer ersten Deckplatte eingebracht werden und nur die erste Deckplatte und den Kern vollständig durchsetzen, wobei die jeweilige Öffnung der Sacklöcher über einen Winkel von mehr als 200°, insbesondere mehr als 300°, von der ersten Deckplatte der jeweils zugeordneten Leichtbauplatte umgeben ist, des Einsetzens und Eindrückens der Beschlagteile in die Sacklöcher der Leichtbauplatten, und des Beaufschlagens des ersten und/oder des zweiten Beschlagteils mit Schwingungen im Ultraschallbereich vorgesehen, so dass im Kontaktbereich zwischen den Beschlagteilen und den Deckplatten der Leichtbauplatten die aus aufschmelzbarem Kunststoff bestehenden Beschlagteile wenigstens abschnittsweise aufschmelzen.

Auf diese Weise können die beiden Beschlagteile sicher in den Deckplatten verankert werden. Die beiden Beschlagteile und damit die beiden Leichtbauplatten werden dann durch Einschrauben einer Schraube durch bzw. in die beiden Beschlagteile miteinander verbunden.

Mittels Ultraschallschwingungen kann lokal Wärme erzeugt werden und die Beschlagteile können abschnittsweise aufgeschmolzen werden. Dadurch kann sich zum einen eine gute Verzahnung der Beschlagteile mit dem umgebenden Material der Leichtbauplatten ergeben, alternativ oder zusätzlich auch eine stoffschlüssige Verbindung des Materials der Beschlagteile und des Materials der Leichtbauplatten.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. In den Zeichnungen zeigen:
- Fig. 1: eine Schnittansicht einer Anordnung mit zwei Leichtbauplatten und einem erfindungsgemäßen Verbindungsbeschlag,
- Fig. 2: eine Draufsicht auf die Anordnung der Fig. 1,
- Fig. 3: eine Schnittansicht einer Leichtbauplatte mit dem zweiten Beschlagteil der Anordnung der Fig. 1,
- Fig. 4: eine Draufsicht auf das zweite Beschlagteil der Fig. 3,
- Fig. 5: eine Ansicht des ersten Beschlagteils der Anordnung der Fig. 1 von schräg oben und
- Fig. 6: eine Schnittansicht des ersten Beschlagteils der Fig. 5.

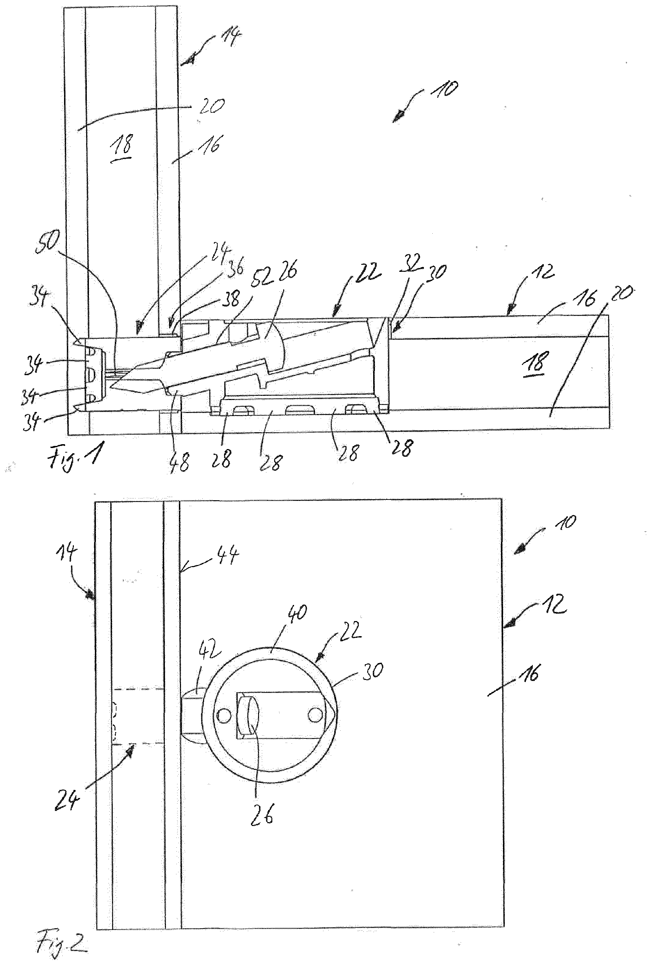

Die Schnittansicht der Fig. 1 zeigt eine erfindungsgemäße Anordnung 10 mit einer ersten Leichtbauplatte 12 und einer zweiten Leichtbauplatte 14, wobei die beiden Leichtbauplatten 12, 14 senkrecht zueinander angeordnet sind. Jede der Leichtbauplatten weist eine erste Deckplatte 16, einen Kern 18 und eine zweite Deckplatte 20 auf. Die Deckplatten 16, 20 bestehen aus kompaktem, drucksteifem Material. Der Kern 18 besteht aus Material mit gegenüber den Deckplatten 16, 20 geringer Dichte. Typischerweise besteht der Kern 18 aus Papierwaben, die aus senkrecht zu den beiden Deckplatten 16, 20 angeordneten und geeignet gefalteten Pappstreifen gebildet sind. Problematisch bei solchen Leichtbauplatten 12, 14 ist, dass übliche Möbelbeschläge, die zum Verbinden von zwei senkrecht zueinander angeordneten Platten verwendet werden, nicht ohne Weiteres eingesetzt werden können, da übliche Möbelbeschläge in den Leichtbauplatten 12, 14 keinen ausreichenden Halt finden. Übliche Möbelbeschläge können zwar unter Zuhilfenahme von reichlich Klebstoff in die Leichtbauplatten 12, 14 eingebracht und dort verankert werden, eine solche Vorgehensweise ist aber zum einen zeitaufwändig und bedarf zum anderen erheblicher Klebstoffmengen.

Die Anordnung 10 weist zur Verbindung der beiden Leichtbauplatten 12, 14 ein erstes Beschlagteil 22 und ein zweites Beschlagteil 24 auf, die mittels einer Schraube 26 miteinander verbunden sind. Die beiden Beschlagteile 22, 24 und die Schraube 26 bilden den erfindungsgemäßen Verbindungsbeschlag. Beide Beschlagteile 22, 24 bestehen vollständig aus aufschmelzbarem Kunststoff, insbesondere thermoplastischem Kunststoff.

Das erste Beschlagteil 22 weist, siehe auch Fig. 2, eine topfartige Form auf und ist in eine Sacklochbohrung in die erste Leichtbauplatte 12 eingesetzt. Die Sacklochbohrung durchsetzt dabei lediglich die erste Deckplatte 16 und den Kern der Leichtbauplatte 12 vollständig. Die zweite Leichtbauplatte 20 wird von der Sacklochbohrung nicht oder lediglich teilweise durchsetzt. In der Darstellung der Fig. 1 endet die Sacklochbohrung auf der Innenseite der zweiten Deckplatte 20.

Das erste Beschlagteil 22 ist so in die Sacklochbohrung eingesetzt, dass mehrere Vorsprünge 28 an der Unterseite des ersten Beschlagteils 22 in das Material der zweiten Deckplatte 20 eindringen. Die Vorsprünge 28 bestehen aus Kunststoff und können tatsächlich nicht in dem in Fig. 1 gezeigten Ausmaß in das Material der zweiten Deckplatte 20 eindringen. Insofern ist die Zeichnung der Fig. 1 lediglich schematisch zu verstehen. Beim Einsetzen des ersten Beschlagteils 22 wird dieses mit Ultraschallschwingungen beaufschlagt. Dies führt zu einem wenigstens teilweisen Aufschmelzen des Kunststoffmaterials der Vorsprünge 28. Das geschmolzene Kunststoffmaterial dringt dann ein Stück weit in das Material der zweiten Deckplatte 20 ein. Nach dem Erkalten des Kunststoffmaterials ist dadurch eine Verzahnung der Vorsprünge mit dem Material der zweiten Deckplatte 20 hergestellt. Alternativ oder zusätzlich kann eine stoffschlüssige Verbindung des aufgeschmolzenen Kunststoffmaterials mit dem Material der zweiten Deckplatte 20 erfolgen. Die Oberseite des ersten Beschlagteils 22 ist bündig mit der Oberseite der ersten Deckplatte 16 angeordnet. Um eine stabile Verankerung des ersten Beschlagteils 22 in der Leichtbauplatte 12 zu erreichen, wofür eine Verbindung der Vorsprünge 28 mit der zweiten Deckplatte 20 erforderlich ist, muss somit die Höhe des ersten Beschlagteils 22 auf die Höhe der Leichtbauplatte 12 und insbesondere auf die Höhe der beiden Deckplatten 16, 20 und die Höhe des Kerns 18 abgestimmt sein.

Das erste Beschlagteil 22 weist einen oberen Rand 30 auf, der senkrecht zur Oberseite des ersten Beschlagteils 22 angeordnet ist und der mit einer Riffelung 32 versehen ist. Die Riffelung 32 ist so ausgebildet, dass sie in das Material der ersten Deckplatte 16 eingreift. Dadurch erfolgt eine Verzahnung der Riffelung 32 mit dem Material der ersten Deckplatte 16. Auch die Riffelung besteht aus aufschmelzbarem Kunststoff, so dass beim Beaufschlagen mit Ultraschallschwingungen die Riffelung wenigstens teilweise aufschmilzt und sich mit dem Material der ersten Deckplatte 16 verbindet.

Das erste Beschlagteil 22 ist somit durch die Riffelung 32 in dem Material der ersten Deckplatte 16 und mittels der Vorsprünge 28 in dem Material der zweiten Deckplatte 20 verankert. In der Darstellung der Fig. 1 ist zu erkennen, dass die mehreren Vorsprünge 28 an der Unterseite des ersten Beschlagteils 22 und die mehreren Vorsprünge 34 an der Unterseite des zweiten Beschlagteils 24 durch die Unterbrechung einer umlaufenden Kante mittels mehrerer Ausnehmungen ausgebildet sind.

Das erste Beschlagteil 22 wird während des Eindrückens in das Sackloch in der ersten Leichtbauplatte 12, also in dem in Fig. 1 dargestellten Zustand, mit Ultraschallschwingungen beaufschlagt. Die dadurch entstehende Reibung führt zu einer Wärmeentwicklung, die letztendlich zu einem Aufschmelzen des Materials der Riffelung 32 und des Materials der Vorsprünge 28 führt. Dadurch wird das erste Beschlagteil 22 mit dem Material der ersten Deckplatte 16 bzw. dem Material der zweiten Deckplatte 20 verzahnt. Je nach Materialpaarung kann auch eine stoffschlüssige Verbindung in diesen Bereichen erzielt werden, indem das aufgeschmolzene Material des ersten Beschlagteils 22 eine Klebewirkung entfaltet.

Das zweite Beschlagteil 24 ist in eine Sacklochbohrung in der zweiten Leichtbauplatte 14 so eingesetzt, dass seine Oberseite bündig mit der Oberseite der ersten Deckplatte der Leichtbauplatte 14 angeordnet ist. Auch die Höhe des zweiten Beschlagteils 24 ist auf die Höhe der Leichtbauplatte 14 und speziell auf die Höhe der zweiten Deckplatte 20, des Kerns 18 und der ersten Deckplatte 16 abgestimmt. Das zweite Beschlagteil 24 ist an seiner Unterseite mit mehreren Vorsprüngen 34 versehen, die sich mit dem Material der zweiten Deckplatte 20 verbinden. Das zweite Beschlagteil 24 weist auch einen Rand 36 auf, der senkrecht zur Oberseite des zweiten Beschlagteils 24 angeordnet ist und der mit einer Riffelung 38 versehen ist. Die Riffelung 38 ist dadurch mit dem Material der ersten Deckplatte 16 der zweiten Leichtbauplatte 14 verzahnt.

Auch das zweite Beschlagteil 24 wird während des Einsetzens in das Sackloch in der zweiten Leichtbauplatte 14, also in dem in Fig. 1 dargestellten Zustand, mit Ultraschallschwingungen beaufschlagt. Dadurch schmilzt das Material der Riffelung 38 sowie das Material der Vorsprünge 34 wenigstens teilweise auf und sorgt, wie bei dem ersten Beschlagteil 22, für eine sehr sichere Verankerung des zweiten Beschlagteils 24 in der zweiten Leichtbauplatte 14.

Die Darstellung der Fig. 2 zeigt die Anordnung 10 der Fig. 1 von oben. Zu erkennen ist die topfartige Ausgestaltung des ersten Beschlagteils 22. Das erste Beschlagteil 22 besteht aus einem ersten kreiszylinderförmigen Grundkörper 40, an dessen Unterseite die Vorsprünge 28 angeordnet sind, vgl. Fig. 1. Der Grundkörper 40 hat einen Fortsatz 42 in der Form eines Abschnitts eines Kreiszylinders. Der Fortsatz 72 erstreckt sich bis zu einer Seitenkante 44 der ersten Leichtbauplatte 12. In der Draufsicht der Fig. 2 ist zu erkennen, dass ein Sackloch für das erste Beschlagteil 22 dadurch hergestellt wird, dass zunächst ein kreiszylindrisches Sackloch in der Größe des Grundkörpers 40 hergestellt wird. Daraufhin wird ein zweites Sackloch mit einem kreiszylindrischen Fräser hergestellt, wobei dieses zweite Sackloch für den Fortsatz 42 dann das erste Sackloch und die Seitenkante 44 jeweils zweimal schneidet. Das erste Beschlagteil 22 kann dann in einfacher Weise von der ersten Deckplatte 16 aus in das hergestellte Sackloch eingedrückt werden.

Das zweite Beschlagteil 24 ist in einem Sackloch in der zweiten Leichtbauplatte 14 angeordnet und, da es in der Ansicht der Fig. 2 verdeckt ist, ist das zweite Beschlagteil 24 lediglich gestrichelt dargestellt.

Die Darstellung der Fig. 2 zeigt darüber hinaus, dass der Rand 30 des ersten Beschlagteils 22 über einen Winkelbereich von etwa 340° von der ersten Deckplatte 16 der ersten Leichtbauplatte 12 umgeben ist. Da die erste Deckplatte 16 aus kompaktem, drucksteifem Material besteht, wird das erste Beschlagteil 22 somit gegenüber Kräften, die parallel zur ersten Deckplatte 16 der ersten Leichtbauplatte 12 wirken, formschlüssig in seiner Position der Fig. 2 gehalten. Dies gilt auch für Kräfte, die in der Darstellung der Fig. 2 nach links wirken, also in Richtung auf die zweite Leichtbauplatte 14 zu. Auch in dieser Richtung sorgt der Formschluss zwischen dem Rand 30 und der Wandung des Sacklochs, das in der ersten Leichtbauplatte 12 hergestellt wurde, speziell die Berandung des Sacklochs auf Höhe der ersten Deckplatte 16, für einen Formschluss zwischen dem ersten Beschlagteil 22 und der ersten Deckplatte 16. Das erste Beschlagteil 22 ist somit mittels der Vorsprünge 28, siehe Fig. 1, sicher in der zweiten Deckplatte 20 und mittels des Formschlusses des Rands 30 und der Riffelung 32, siehe Fig. 1, sicher in der ersten Deckplatte 16 verankert. Trotz des Kerns 18 aus Material mit geringer Dichte, speziell Papierwaben aus senkrecht zu den Deckplatten 16, 20 stehenden und gefalteten Pappstreifen, kann dadurch das erste Beschlagteil 22 sicher in der ersten Leichtbauplatte 12 verankert werden.

Das zweite Beschlagteil 24 weist eine allgemein kreiszylindrische Form auf und ist, wie erläutert wurde, ebenfalls mittels der Vorsprünge 34 in der zweiten Deckplatte 20 und mittels eines Formschlusses sowie der Riffelung 38 in der ersten Deckplatte 16 der zweiten Leichtbauplatte 14 verankert. Der erfindungsgemäße Verbindungsbeschlag aus dem ersten Beschlagteil 22 und dem zweiten Beschlagteil 24 kann dadurch eine sichere rechtwinklige Verbindung der beiden Leichtbauplatten 12, 14 sicherstellen. Wie bereits erwähnt wurde, ist diese Verbindung lösbar und kann durch Herausdrehen der Schraube 26 gelöst werden.

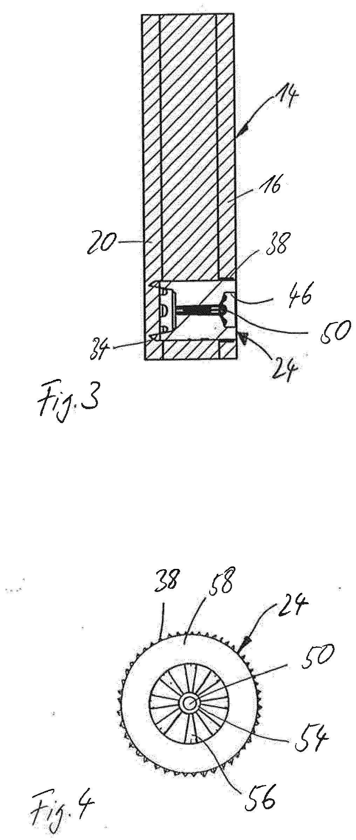

Die Darstellung der Fig. 3 zeigt eine Schnittansicht der zweiten Leichtbauplatte 14 mit dem zweiten Beschlagteil 24. Wie bereits erläutert wurde, ist das zweite Beschlagteil 24 mit den Vorsprünge 34 in der zweiten Deckplatte 20 und mittels eines Formschlusses sowie der Riffelung 38 in der ersten Deckplatte 16 der zweiten Leichtbauplatte 14 verankert. Zu erkennen ist an der Oberseite des zweiten Beschlagteils 24, die bündig zu einer Oberseite der ersten Deckplatte 16 liegt, eine zentrale, kreiszylinderförmige Ausnehmung 46 in dem zweiten Beschlagteil 24. Diese kreiszylinderförmige Ausnehmung 46 dient zur Aufnahme eines Führungszapfens 48 an dem ersten Beschlagteil 22, vgl. Fig. 1 und Fig. 5, 6, wobei dieser Führungszapfen ebenfalls eine kreiszylindrische Form aufweist. Sind die beiden Beschlagteile 22, 24 in die jeweilige Leichtbauplatte 12, 14 eingesetzt und dort verankert, können die beiden Leichtbauplatten 12, 14 aneinander angesetzt werden. Sobald dann der Führungszapfen 48 oder mehrere Führungszapfen 48 mehrerer Verbindungsbeschläge in die Ausnehmungen 46 des jeweils zugeordneten zweiten Beschlagteils 24 eingesetzt sind, sind die beiden Leichtbauplatten 12, 14 in der korrekten Position zueinander angeordnet. Das Eindrehen der Schraube 26 dient dann lediglich noch zur Sicherung der Verbindung zwischen den beiden Leichtbauplatten 12, 14 sowie zum Herstellen einer gewissen Anpresskraft der beiden Leichtbauplatten 12, 14 gegeneinander.

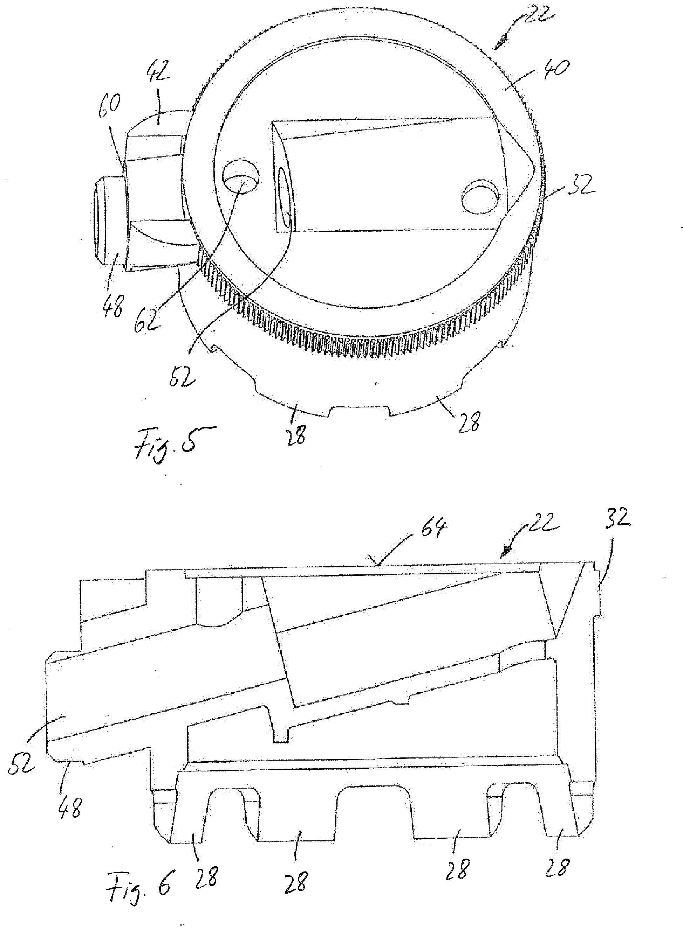

Es ist in der Darstellung der Fig. 3 bereits zu erkennen, dass der Rand der Ausnehmung 46 senkrecht zur Oberseite der ersten Deckplatte 16 der zweiten Leichtbauplatte 14 verläuft. In Fig. 1 und Fig. 6 ist zu erkennen, dass auch die Berandung des Führungszapfens 48 parallel zur Oberseite der ersten Deckplatte 16, allgemein parallel zur ersten Leichtbauplatte 12 verläuft. Die beiden Leichtbauplatten 12, 14 können somit dadurch aneinander angesetzt werden, dass die erste Leichtbauplatte 12 und/oder die zweite Leichtbauplatte 14 auf einer Arbeitsfläche parallel zueinander verschoben werden. Dies erleichtert den Zusammenbau der beiden Leichtbauplatten 12, 14 mit dem erfindungsgemäßen Verbindungsbeschlag erheblich.

In Fig. 3 ist auch ein Abschnitt 50 eines Schraubkanals zu erkennen, in den, siehe Fig. 1, die Schraube 26 eingeschraubt wird. Das erste Beschlagteil 22 weist, siehe Fig. 1 und Fig. 6, einen Abschnitt 52 des Schraubkanals auf, der allerdings schräg zu dem Abschnitt 50 des Schraubkanals im zweiten Beschlagteil 24 verläuft. Der schräge Verlauf des Schraubkanals im ersten Beschlagteil 24 ist sinnvoll, um die Schraube 26 von der Oberseite der Deckplatte 16 der ersten Leichtbauplatte 12 zugänglich zu machen. Dies erleichtert das Einschrauben der Schraube 26 erheblich.

Der Schraubkanal 50 ist, siehe die Draufsicht der Fig. 4 auf das zweite Beschlagteil 24, mittels eines Rohrabschnitts 54 gebildet, der von mehreren Speichen 56 getragen ist. Das zweite Beschlagteil 24 ist vorteilhafterweise als Kunststoffspritzgussteil ausgebildet. Die Speichen 56 erstecken sich ausgehend von einem ringförmigen Grundkörper 58 aus nach innen bis zu dem Rohrabschnitt 54. Es wurde bereits ausgeführt, dass der Abschnitt 50 des Schraubkanals schräg zu der Schraube 26 verläuft, wenn die beiden Leichtbauplatten 12, 14 senkrecht zueinander angeordnet sind. Der Kunststoff des Rohrabschnitts 54 ist dabei so weich, dass er von der Schraube 26 beim Einschrauben durchdrungen werden kann. Die Speichen 56 sorgen dann in Verbindung mit dem Rohrabschnitt 54 für einen sicheren Halt des Gewindes der Schraube 26, auch wenn die Schraube 26 schräg zum Schraubkanal 50 eingeschraubt wird. Ein weiterer Vorteil der Ausbildung des Rohrabschnitts 54, der durch die Speichen 56 gehalten wird, ist, dass das zweite Beschlagteil 24 rotationssymmetrisch zum Schraubkanal 50 aufgebaut ist. Eine Ausrichtung des zweiten Beschlagteils 24 bei der Montage in der zweiten Leichtbauplatte 14, was die Winkelposition um den Schraubkanal 50 angeht, spielt somit keine Rolle.

In der Darstellung der Fig. 4 ist schematisch die Riffelung 38 am oberen Rand des zweiten Beschlagteils 24 angedeutet.

Die Darstellung der Fig. 5 zeigt eine Ansicht des ersten Beschlagteils 22 von schräg oben. Gut zu erkennen ist der Aufbau des ersten Beschlagteils 22 aus dem kreiszylindrischen Grundkörper 40 mit dem daran angesetzten Fortsatz 42. Wie ausgeführt wurde, erstreckt sich der Führungszapfen 48 ausgehend von dem Fortsatz 42. Der Führungszapfen 48 ragt, siehe auch Fig. 1, im korrekt montierten Zustand des ersten Beschlagteils 22 über die Seitenkante der ersten Leichtbauplatte 12 hinaus. Der Fortsatz 42 schließt hingegen, siehe erneut Fig. 1, mit seiner Außenkante 60 bündig mit der Seitenkante der ersten Leichtbauplatte 12 ab.

Zu erkennen ist in Fig. 5, dass der Abschnitt 52 des Schraubkanals im ersten Beschlagteil 22 schräg zu einer Oberseite des ersten Beschlagteils 22 verläuft und sich ausgehend von der Oberseite nach unten erstreckt, siehe auch Fig. 1. Der Führungszapfen 48 umgibt den Schraubkanal vollständig, erstreckt sich aber, siehe erneut Fig. 1, parallel zu einer Oberseite des ersten Beschlagteils 22. Wie erläutert wurde, erleichtert dies das Ansetzen der ersten Leichtbauplatte 12 mit dem ersten Beschlagteil 22 an die zweite Leichtbauplatte 14 mit dem zweiten Beschlagteil 24. Der Führungszapfen 48 kann als Einsteckteil ausgeführt sein. Bei abgenommenen Einsteckzapfen 48 schließt das erste Beschlagteil 22 dann bündig mit der Seitenkante der ersten Leichtbauplatte 12 ab, vergleiche Fig. 1.

Von der Oberseite des ersten Beschlagteils 22 geht eine Durchgangsbohrung 62 in den Abschnitt 52 des Schraubkanals hinein. In diese Bohrung 62 kann beispielsweise eine Sicherungsschraube eingesetzt werden, um die Schraube 26 gegen Herausdrehen zu sichern. Hierzu weist die Schraube 26, siehe Fig. 1, unterhalb ihres Schraubenkopfs eine ringförmige Nut auf, in die sich dann beispielsweise eine Madenschraube, die in die Bohrung 62 eingesetzt ist, hineinerstrecken kann.

Die Darstellung der Fig. 6 zeigt eine Schnittansicht des ersten Beschlagteils 22 der Fig. 5. Gut zu erkennen ist in Fig. 6, dass eine Oberseite 64 des zweiten Beschlagteils 22 und der kreiszylindrische Führungszapfen 48 parallel zueinander verlaufen. Der Führungszapfen 48 weist an seinem äußeren Ende eine Abschrägung auf, um das Einführen in die Ausnehmung 46 des zweiten Beschlagteils 24 zu erleichtern. Zu erkennen ist auch die über den Umfang des Führungszapfens 48 variierende Wandstärke. Diese variierende Wandstärke entsteht dadurch, dass der schräg zur Oberseite 64 verlaufende Abschnitt 52 des Schraubkanals von dem parallel zur Oberseite 64 verlaufenden Führungszapfen 48 umgeben ist.

Der Führungszapfen 48 und der Fortsatz 42 können ein einstückiges, vom übrigen Beschlagteil 22 separates Teil bilden, das einsteckbar ausgebildet ist. Das Beschlagteil 22 ist bei einer solchen Ausgestaltung flexibel einsetzbar, da der Schraubkanal 52 kürzer oder länger ausgebildet werden kann und das Beschlagteil 22 ohne den Fortsatz 42 und den Führungszapfen 48 eine zylindrische Form hat.

## Patentansprüche

1. Verbindungsbeschlag zum Verbinden von zwei senkrecht zueinander angeordneten Leichtbauplatten (12, 14), wobei beide Leichtbauplatten (12, 14) eine erste Deckplatte (16) und eine zweite Deckplatte (20) aus kompaktem, drucksteifem Material und einen zwischen den Deckplatten (16, 20) angeordneten Kern (18) aus Material mit gegenüber den Deckplatten (16, 20) geringer Dichte aufweist, insbesondere Papierwaben oder Schaumstoff, mit einem ersten topfartigen Beschlagteil (22) und einem zweiten topfartigen Beschlagteil (24), wobei das erste Beschlagteil (22) und das zweite Beschlagteil (24) zum Einsetzen in jeweils eine Sacklochbohrung in den Leichtbauplatten (12, 14) vorgesehen sind, wobei die Sacklochbohrungen jeweils nur die erste Deckplatte (16) und den Kern (18) vollständig durchsetzen, und dass das erste Beschlagteil und das zweite Beschlagteil jeweils ausgebildet sind, um in einem Abstand von einer jeweiligen näherliegenden Seitenkante der zugeordneten Leichtbauplatte angeordnet zu werden, so dass eine Oberseite eines Grundkörpers des ersten Beschlagteils und eine Oberseite des zweiten Beschlagteils über einen Winkel von mehr als 200 Grad, insbesondere mehr als 300 Grad, von der ersten Deckplatte der jeweils zugeordneten Leichtbauplatte umgebbar ist, **dadurch gekennzeichnet, dass** jedes Beschlagteil (22, 24) an seiner im eingebauten Zustand an dem Boden des Sacklochs anliegenden Unterseite mindestens einen Vorsprung (28, 34) aufweist, der aus unter Ultraschallbeaufschlagung aufschmelzbarem Kunststoff besteht, so dass der Vorsprung bei einer Ultraschallbeaufschlagung teilweise aufschmelzen kann und mit dem Material der zweiten Deckplatte am Boden des Sacklochs verbindbar ist, wobei das erste Beschlagteil (22) einen Schraubkanal (52) für eine Verbindungsschraube (26) und einen den Schraubkanal (52) in axialer Richtung abschnittsweise und in radialer Richtung vollständig umgebenden Führungszapfen (48), der sich ausgehend von einem Basisteil des ersten Beschlagteils (22) radial nach außen erstreckt, für eine zuverlässige Positionierung des ersten Beschlagteils (22) zum zweiten Beschlagteil (24) aufweist, wobei das zweite Beschlagteil (24) an seiner Oberseite eine Ausnehmung (46) aufweist, die passend zu dem Führungszapfen (48) ausgebildet ist und der Schraubkanal (52) so bemessen ist, dass er sich beim Eindrehen der Verbindungsschraube (26) aufweitet und sich auch der Führungszapfen (48) leicht aufweitet, so dass sich auch ein Reibschluss zwischen dem Führungszapfen (48) und der zugeordneten Wandung des anderen Beschlagteils (24) ergibt.

2. Verbindungsbeschlag nach Anspruch 1, **dadurch gekennzeichnet, dass** an der Unterseite wenigstens eines der Beschlagteile (22, 24) mehrere voneinander beabstandete Vorsprünge (28, 34) vorgesehen sind.

3. Verbindungsbeschlag nach Anspruch 2, **dadurch gekennzeichnet, dass** an der Unterseite wenigstens eines der Beschlagteile (22, 24) eine kreisförmige Kante vorgesehen ist, die durch Ausnehmungen unterbrochen ist und die mehrere Vorsprünge (28, 34) bildet.

4. Verbindungsbeschlag nach wenigstens einem der vorstehenden Ansprüche, **dadurch gekennzeichnet, dass** ein Rand (30, 36) wenigstens eines der Beschlagteile (22, 24), der um eine Oberseite (64) des Beschlagteils (22, 24) umläuft, wobei die Oberseite (64) des Beschlagteils (22, 24) im eingebauten Zustand bündig mit einer Oberseite (64) der ersten Deckplatte (16) der Leichtbauplatte (12, 14) verlaufen kann senkrecht zur Oberseite (64) des Beschlagteils (22, 24) angeordnet und mit einer Riffelung (32, 38) versehen ist.

5. Verbindungsbeschlag nach wenigsten einem der vorstehenden Ansprüche, **dadurch gekennzeichnet, dass** das erste Beschlagteil (22) einen kreiszylindrischen Grundkörper (40) und einen von dem Grundkörper (40) ausgehenden Fortsatz (42) aufweist, wobei der Fortsatz (42) einen Abschnitt eines Kreiszylinders bildet.

6. Verbindungsbeschlag nach Anspruch 5, **dadurch gekennzeichnet, dass** der Schraubkanal schräg zu einer Oberseite (64) des ersten Beschlagteils (22) verläuft und der den Schraubkanal abschnittsweise umgebende Führungszapfen (48) parallel zur Oberseite (64) des ersten Beschlagteils (22) verläuft.

7. Verbindungsbeschlag nach Anspruch 5 oder 6, **dadurch gekennzeichnet, dass** der Führungszapfen (48) eine kreiszylindrische Form hat.

8. Verbindungsbeschlag nach einem der vorstehenden Ansprüche , **dadurch gekennzeichnet, dass** ausgehend von der Ausnehmung (46) an der Oberseite des zweiten Beschlagteils (24) der Schraubkanal des zweiten Beschlagteils (24) angeordnet ist.

9. Verbindungsbeschlag nach wenigstens einem der vorstehenden Ansprüche, **dadurch gekennzeichnet, dass** die beiden Beschlagteile (22, 24) vollständig aus aufschmelzbaren Kunststoff bestehen.

10. Anordnung mit zwei Leichtbauplatten und wenigstens einem Verbindungsbeschlag nach wenigstens einem der vorstehenden Ansprüche, **dadurch gekennzeichnet, dass** die beiden Beschlagteile (22, 24) mit einer Verbindungsschraube (26) miteinander verbunden sind, dass ein Grundkörper (40) des ersten Beschlagteils (22) und das zweite Beschlagteil (24) jeweils in einem Abstand von einer jeweiligen näherliegenden Seitenkante (44) der zugeordneten Leichtbauplatte (12, 14) angeordnet sind, so dass eine Oberseite des Grundkörpers (40) des ersten Beschlagteils (22) und eine Oberseite des zweiten Beschlagteils (24) über einen Winkel von mehr als 200 Grad, insbesondere mehr als 300 Grad, von der ersten Deckplatte (16) der jeweils zugeordneten Leichtbauplatte (12, 14) umgeben sind und dass der wenigstens eine an dem Boden des Sacklochs anliegende Vorsprung des ersten Beschlagteils (22) und/oder des zweiten Beschlagteils (24) wenigstens teilweise aufgeschmolzen und mit dem Material der zweiten Deckplatte (20) verbunden ist.

11. Anordnung nach Anspruch 10, **dadurch gekennzeichnet, dass** wenigstens eines der Beschlagteile (22, 24) einen Rand (30, 36) aufweist, der um eine Oberseite (64) des Beschlagteils (22, 24) umläuft, wobei die Oberseite (64) des Beschlagteils (22, 24) im eingebauten Zustand bündig mit einer Oberseite (64) der ersten Deckplatte (16) der Leichtbauplatte (12, 14) verläuft, dass der Rand (30, 36) senkrecht zur Oberseite (64) des Beschlagteils (22, 24) angeordnet und mit einer Riffelung (32, 38) versehen ist und dass die Riffelung (32,38) wenigstens teilweise aufgeschmolzen und mit dem Material der jeweiligen ersten Deckplatte (16) verbunden ist.

12. Verfahren zum Verbinden von zwei Leichtbauplatten (12, 14), mit den Schritten
- Einbringen von jeweils einer Sacklochbohrung in jede der Leichtbauplatten (12, 14), wobei die Sacklochbohrungen senkrecht zu einer ersten Deckplatte (16) eingebracht werden und nur die erste Deckplatte (16) und den Kern (18) der Leichtbauplatten (12, 14) vollständig durchsetzen und wobei die jeweilige Öffnung der Sacklöcher über einen Winkel von mehr als 200 Grad, insbesondere mehr als 300 Grad, von der ersten Deckplatte (16) der jeweils zugeordneten Leichtbauplatte (12, 14) umgeben ist
- Einsetzen und Eindrücken der Beschlagteile (22, 24) in die Sacklöcher der Leichtbauplatten (12, 14), **dadurch gekennzeichnet, dass** das erste und/oder das zweite Beschlagteil (22, 24) mit Schwingungen im Ultraschallbereich beaufschlagt wird, so dass im Kontaktbereich zwischen den Beschlagteilen (22, 24) und den jeweiligen zweiten Deckplatten (20) der Leichtbauplatten (12, 14) der wenigstens eine aus aufschmelzbaren Kunststoff bestehende Vorsprung (22, 24) wenigstens abschnittsweise aufschmilzt und sich mindestens mit dem Material der jeweiligen zweiten Deckplatte (20) verbindet
- Positionierung des ersten Beschlagteils (22) zum zweiten Beschlagteil (24) dadurch, dass das erste Beschlagteil (22) einen Schraubkanal für eine Verbindungsschraube (26) und einen den Schraubkanal in axialer Richtung abschnittsweise und in radialer Richtung vollständig umgebenden Führungszapfen (48) aufweist, der sich ausgehend von einem Basisteil des ersten Beschlagteils (22) radial nach außen erstreckt und dass das zweite Beschlagteil (24) an seiner Oberseite eine Ausnehmung (46) aufweist, die passend zu dem Führungszapfen (48) ausgebildet ist und dass der Schraubkanal (52) so bemessen ist, dass er sich beim Eindrehen der Verbindungsschraube (26) aufweitet und sich auch der Führungszapfen (48) leicht aufweitet, so dass sich auch ein Reibschluss zwischen dem Führungszapfen (48) und der zugeordneten Wandung des anderen Beschlagteils (24) ergibt.

13. Verfahren nach Anspruch 12, **dadurch gekennzeichnet, dass** durch Beaufschlagen des ersten und/oder des zweiten Beschlagteils (22, 24) mit Schwingungen im Ultraschallbereich eine Riffelung (32, 38) an einem Rand (30, 36) des ersten Beschlagteils (22) und/oder des zweiten Beschlagteils (24), der um eine Oberseite (64) des Beschlagteils (22, 24) umläuft, wenigstens abschnittsweise aufschmilzt und sich mindestens mit dem Material der jeweiligen ersten Deckplatte (16) verbindet.

## Claims

1. A connecting fitting for connecting two lightweight construction panels (12, 14) arranged at right angles to one another, wherein
both lightweight construction panels (12, 14) have a first cover plate (16) and a second cover plate (20) made of a dense material that is rigid in compression, and a core (18) arranged between the cover plates (16, 20) and made of a material having a low density compared with the cover plates (16, 20), in particular a paper honeycomb or foam material, with a first cup-shaped fitting element (22) and a second cup-shaped fitting element (24), wherein
the first fitting element (22) and the second fitting element (24) are designed for insertion in each case into a blind hole in the lightweight construction panels (12, 14), wherein
each of the blind holes only fully penetrates the first cover plate (16) and the core (18), and the first fitting element and the second fitting element are each designed to be arranged at a distance from a respective nearer side edge of the associated lightweight construction panel, such that an upper face of a base body of the first fitting element and an upper face of the second fitting element can be enclosed by the first cover plate of the respectively associated lightweight construction panel over an angle of more than 200 degrees, in particular of more than 300 degrees,
**characterised in that**,
each fitting element (22, 24) has at least one projection (28, 34) on its lower face, which in the installed state abuts against the bottom of the blind hole, and which consists of plastic material that can be fused when subjected to ultrasound, so that the projection can partially fuse when subjected to ultrasound, and can be bonded with the material of the second cover plate at the bottom of the blind hole, wherein
the first fitting element (22) has a screw passage (52) for a connecting screw (26), and a guide pin (48) that surrounds the screw passage (52), partially in the axial direction and completely in the radial direction, and that extends radially outwards starting from a base part of the first fitting element (22), for a reliable positioning of the first fitting element (22) relative to the second fitting element (24), wherein
the second fitting element (24) has on its upper face a recess (46), which is designed to be compatible with the guide pin (48), and the screw passage (52) is dimensioned such that it expands when the connecting screw (26) is screwed in, and the guide pin (48) also expands slightly, such that a frictional fit also results between the guide pin (48) and the associated wall of the other fitting element (24).

2. The connecting fitting in accordance with claim 1, **characterised in that**,
a plurality of projections (28, 34), spaced apart from one another, are provided on the lower face of at least one of the fitting elements (22, 24).

3. The connecting fitting in accordance with claim 2, **characterised in that**,
a circular edge, which is interrupted by recesses and which forms a plurality of projections (28, 34), is provided on the lower face of at least one of the fitting elements (22, 24).

4. The connecting fitting in accordance with at least one of the preceding claims,
**characterised in that**,
an edge (30, 36) of at least one of the fitting elements (22, 24), which circulates around an upper face (64) of the fitting element (22, 24), wherein
in the installed state the upper face (64) of the fitting element (22, 24) can run flush with an upper face (64) of the first cover plate (16) of the lightweight construction panel (12, 14), is arranged at right angles to the upper face (64) of the fitting element (22, 24), and is provided with a corrugation (32, 38).

5. The connecting fitting in accordance with at least one of the preceding claims,
**characterised in that**,
the first fitting element (22) has a circular cylindrical base body (40) and an extension (42) starting from the base body (40), wherein
the extension (42) forms a section of a circular cylinder.

6. The connecting fitting in accordance with claim 5,
**characterised in that**,
the screw passage runs obliquely with respect to an upper face (64) of the first fitting element (22), and the guide pin (48) partially surrounding the screw passage runs parallel to the upper face (64) of the first fitting element (22).

7. The connecting fitting in accordance with claim 5 or 6,
**characterised in that**,
the guide pin (48) has a circular cylindrical shape.

8. The connecting fitting in accordance with one of the preceding claims,
**characterised in that**,
starting from the recess (46), the screw passage of the second fitting element (24) is arranged on the upper face of the second fitting element (24).

9. The connecting fitting in accordance with at least one of the preceding claims,
**characterised in that**,
the two fitting elements (22, 24) consist entirely of fusible plastic.

10. An arrangement with two lightweight construction panels and at least one connecting fitting in accordance with at least one of the preceding claims,
**characterised in that**,
the two fitting elements (22, 24) are connected to one another by a connecting screw (26),
**in that**,
a base body (40) of the first fitting element (22) and the second fitting element (24) are each arranged at a distance from a respective nearer side edge (44) of the associated lightweight construction panel (12, 14), such that an upper face of the base body (40) of the first fitting element (22) and an upper face of the second fitting element (24) are enclosed by the first cover plate (16) of the respectively associated lightweight construction panel (12, 14) over an angle of more than 200 degrees, in particular of more than 300 degrees,
and **in that**,
the at least one projection of the first fitting element (22) and/or of the second fitting element (24), abutting against the bottom of the blind hole, is at least partially fused and bonded with the material of the second cover plate (20).

11. The arrangement in accordance with claim 10,
**characterised in that**,
at least one of the fitting elements (22, 24) has an edge (30, 36) that circulates around an upper face (64) of the fitting element (22, 24), wherein
the upper face (64) of the fitting element (22, 24) in the installed state runs flush with an upper face (64) of the first cover plate (16) of the lightweight construction panel (12, 14),
**in that**,
the edge (30, 36) is arranged at right angles to the upper face (64) of the fitting element (22, 24) and is provided with a corrugation (32, 38),
and **in that**,
the corrugation (32, 38) is at least partially fused and bonded with the material of the respective first cover plate (16).

12. A method for the connection of two lightweight construction panels (12, 14) with the steps:
- introduction of a blind hole into each of the lightweight construction panels (12, 14), wherein the blind holes are introduced at right angles to a first cover plate (16) and only fully penetrate the first cover plate (16) and the core (18) of the lightweight construction panels (12, 14), and wherein
the respective opening of the blind holes is enclosed by the first cover plate (16) of the respectively associated lightweight construction panel (12, 14) over an angle of more than 200 degrees, in particular of more than 300 degrees
- insertion and impression of the fitting elements (22, 24) into the blind holes of the lightweight construction panels (12, 14),
**characterised in that**,
the first and/or the second fitting element (22, 24) is subjected to vibrations in the ultrasonic range, so that in the contact region between the fitting elements (22, 24) and the respective second cover plates (20) of the lightweight construction panels (12, 14) the at least one projection (22, 24) consisting of fusible plastic fuses at least partially, and bonds at least with the material of the respective second cover plate (20)
- positioning of the first fitting element (22) relative to the second fitting element (24), **in that** the first fitting element (22) has a screw passage for a connecting screw (26) and a guide pin (48) that surrounds the screw passage partially in the axial direction and completely in the radial direction, and that extends radially outwards starting from a base part of the first fitting element (22), and **in that** the second fitting element (24) has a recess (46) on its upper face, which is designed to be compatible with the guide pin (48), and **in that** the screw passage (52) is dimensioned such that it expands when the connecting screw (26) is screwed in, and the guide pin (48) also expands slightly, such that a frictional fit also results between the guide pin (48) and the associated wall of the other fitting element (24).

13. The method in accordance with claim 12,
**characterised in that**,
by subjecting the first and/or the second fitting element (22, 24) to vibrations in the ultrasonic range, a corrugation (32, 38) on an edge (30, 36) of the first fitting element (22) and/or the second fitting element (24), which circulates around an upper face (64) of the fitting element (22, 24), fuses at least partially and bonds at least with the material of the respective first cover plate (16).

## Revendications

1. Ferrure d'assemblage, destinée à assembler deux panneaux de construction légers (12, 14) disposés perpendiculairement l'un à l'autre, les deux panneaux de construction légers (12, 14) comportant un premier panneau de recouvrement (16) et un deuxième panneau de recouvrement (20) en une matière compacte, rigide à la pression et une âme (18), placée entre les panneaux de recouvrement (16, 20) en une matière de densité moindre par rapport aux panneaux de recouvrement (16, 20), notamment en papier alvéolaire ou en mousse synthétique, pourvue d'une première pièce de ferrure (22) en forme de pot et d'une deuxième pièce de ferrure (24) en forme de pot, la première pièce de ferrure (22) et la deuxième pièce de ferrure (24) étant prévues pour être insérées dans respectivement un perçage borgne dans les panneaux de construction légers (12, 14), les perçages borgnes ne traversant complètement chaque fois que le premier panneau de recouvrement (16) et l'âme (18) et la première pièce de ferrure et la deuxième pièce de ferrure étant conçues chacune pour être placées avec un écart par rapport à une arête latérale respective plus proche du panneau de construction léger associé, de telle sorte qu'une face supérieure d'un corps de base de la première pièce de ferrure et une face supérieure de la deuxième pièce de ferrure puisse être entourée sur un angle de plus de 200 degrés, notamment de plus de 300 degrés par le premier panneau de recouvrement du panneau de construction léger respectivement associé, **caractérisée en ce que** sur sa face inférieure jouxtant le fond inférieur du perçage borgne en position montée, chaque pièce de ferrure (22, 24) comporte au moins une saillie (28, 34) qui est constituée en une matière plastique fusible lors d'une exposition aux ultrasons, de sorte que lors d'une exposition aux ultrasons, la saillie puisse fondre en partie et soit susceptible d'être assemblée avec la matière du deuxième panneau de recouvrement, sur le fond inférieur du perçage borgne, la première pièce de ferrure (22) comportant un canal de vissage (52) destiné à une vis d'assemblage (26) et un tourillon de guidage (48) entourant le canal de vissage (52) par endroits dans la direction axiale et totalement dans la direction radiale, qui à partir d'une pièce de base de la première pièce de ferrure (22) s'étend vers l'extérieur en direction radiale, pour un positionnement fiable de la première pièce de ferrure (22) par rapport à la deuxième pièce de ferrure (24), la deuxième pièce de ferrure (24) comportant sur sa face supérieure un évidement (46) qui est conçu en ajustement au tourillon de guidage (48) et le canal de vissage (52) étant dimensionné de sorte à s'évaser lors du vissage de la vis d'assemblage (26) et de sorte qu'également le tourillon de guidage (48) s'évase légèrement, de manière qu'il en résulte également une liaison par friction entre le tourillon d'assemblage (48) et la paroi associée de l'autre pièce de ferrure (24).

2. Ferrure d'assemblage selon la revendication 1, **caractérisée en ce que** sur la face inférieure d'au moins l'une des pièces de ferrure (22, 24) sont prévues plusieurs saillies (28, 34) écartées les unes des autres.

3. Ferrure d'assemblage selon la revendication 2, **caractérisée en ce que** sur la face inférieure d'au moins l'une des pièces de ferrure (22, 24) est prévue une arête de forme circulaire qui est interrompue par des évidements et qui forme plusieurs saillies (28, 34) .

4. Ferrure d'assemblage selon au moins l'une quelconque des revendications précédentes, **caractérisée en ce qu'**un bord (30, 36) d'au moins l'une des pièces de ferrure (22, 24) qui entoure la face supérieure (64) de la pièce de ferrure (22, 24), en position montée, la face supérieure (64) de la pièce de ferrure (22, 24) étant susceptible de s'écouler à fleur d'une face supérieure (64) du premier panneau de recouvrement (16) du panneau de construction léger (12, 14), est placé à la perpendiculaire de la face supérieure (64) de la pièce de ferrure (22, 24) et est muni d'une cannelure (32, 38).

5. Ferrure d'assemblage selon au moins l'une quelconque des revendications précédentes, **caractérisée en ce que** la première pièce de ferrure (22) comporte un corps de base (40) de forme cylindrique circulaire et un prolongement (42) partant du corps de base (40), le prolongement (42) formant un segment d'un cylindre circulaire.

6. Ferrure d'assemblage selon la revendication 5, **caractérisée en ce que** le canal de vissage s'écoule en oblique par rapport à une face supérieure (64) de la première pièce de ferrure (22) et **en ce que** le tourillon de guidage (48) entourant par endroits le canal de vissage s'écoule à la parallèle de la face supérieure (64) de la première pièce de ferrure (22).

7. Ferrure d'assemblage selon la revendication 5 ou 6, **caractérisée en ce que** le tourillon de guidage (48) a une forme cylindrique circulaire.

8. Ferrure d'assemblage selon l'une quelconque des revendications précédentes, **caractérisée en ce qu'**en partant de l'évidement (46), le canal de vissage de la deuxième pièce de ferrure (24) est placé sur la face supérieure de la deuxième pièce de ferrure (24).

9. Ferrure d'assemblage selon au moins l'une quelconque des revendications précédentes, **caractérisée en ce que** les deux pièces de ferrure (22, 24) sont entièrement constituées en une matière plastique fusible.

10. Agencement de deux panneaux de construction légers et d'au moins une ferrure d'assemblage selon au moins l'une quelconque des revendications précédentes, **caractérisé en ce que** les deux pièces de ferrure (22, 24) sont assemblées l'une avec l'autre à l'aide d'une vis d'assemblage (26), **en ce qu'**un corps de base (40) de la première pièce de ferrure (22) et la deuxième pièce de ferrure (24) sont placés respectivement avec un écart par rapport à une arête latérale (44) plus proche respective du panneau de construction léger (12, 14) associé, de sorte qu'une face supérieure du corps de base (40) de la première pièce de ferrure (22) et une face supérieure de la deuxième pièce de ferrure (24) soient entourées sur un angle de plus de 200 degrés, notamment de plus de 300 degrés par le premier panneau de recouvrement (16) du panneau de construction léger (12, 14) respectivement associé et **en ce que** l'au moins une saillie de la première pièce de ferrure (22) et/ou de la deuxième pièce de ferrure (24) jouxtant le fond inférieur du perçage borgne fonde au moins en partie et s'assemble avec la matière du deuxième panneau de recouvrement (20).

11. Agencement selon la revendication 10, **caractérisé en ce qu'**au moins l'une des pièces de ferrure (22, 24) comporte un bord (30, 36) qui entoure une face supérieure (64) de la pièce de ferrure (22, 24), en position montée, la face supérieure (64) de la pièce de ferrure (22, 24) s'écoulant à fleur d'une face supérieure (64) du premier panneau de recouvrement (16) du panneau de construction léger (12, 14), **en ce que** le bord (30, 36) est placé à la perpendiculaire de la face supérieure (64) de la pièce de ferrure (22, 24) et est muni d'une cannelure (32, 38) et **en ce que** la cannelure (32, 38) est au moins partiellement fondue et assemblée avec la matière du premier panneau de recouvrement (16) respectif.

12. Procédé, destiné à assembler deux panneaux de construction légers (12, 14), comportant les étapes consistant à :
- ménager respectivement un perçage borgne dans chacun des panneaux de construction légers (12, 14), les perçages borgnes étant ménagés à la perpendiculaire d'un premier panneau de recouvrement (16) et ne traversant complètement que le premier panneau de recouvrement (16) et l'âme (18) du panneau de construction léger (12, 14) et l'orifice respectif des perçages borgnes étant entouré sur un angle de plus de 200 degrés, notamment de plus de 300 degrés par le premier panneau de recouvrement (16) du panneau de construction léger (12, 14) respectivement associé,
- insérer et sertir les pièces de ferrure (22, 24) dans les perçages borgnes des panneaux de construction légers (12, 14), **caractérisé en ce qu'**on expose la première et/ou la deuxième pièce de ferrure (22, 24) à des oscillations dans le domaine des ultrasons, de telle sorte que dans la zone de contact entre les pièces de ferrure (22, 24) et les deuxièmes panneaux de recouvrement (20) respectifs des panneaux de construction légers (12, 14), l'au moins une saillie (22, 24) constituée de matière plastique fusible fonde au moins par endroits et s'assemble au moins avec la matière du deuxième panneau de recouvrement (20) respectif,
- positionner la première pièce de ferrure (22) par rapport à la deuxième pièce de ferrure (24), **en ce que** la première pièce de ferrure (22) comporte un canal de vissage destiné à une vis d'assemblage (26) et un tourillon de guidage (48) entourant le canal de vissage par endroits dans la direction axiale et totalement dans la direction radiale, qui à partir d'une pièce de base de la première pièce de ferrure (22) s'étend vers l'extérieur en direction radiale et **en ce que** sur sa face supérieure, la deuxième pièce de ferrure (24) comporte un évidement (46) qui est conçu en ajustement au tourillon de guidage (48) et **en ce que** le canal de vissage (52) est dimensionné de sorte à s'évaser lors du vissage de la vis d'assemblage (26) et de sorte qu'également le tourillon d'assemblage (48) s'évase légèrement, de manière qu'il en résulte également une liaison par friction entre le tourillon d'assemblage (48) et la paroi associée de l'autre pièce de ferrure (24).

13. Procédé selon la revendication 12, **caractérisé en ce que** par exposition de la première et/ou de la deuxième pièce de ferrure (22, 24) à des oscillations dans le domaine des ultrasons, une cannelure (32, 38) sur un bord (30, 36) de la première pièce de ferrure (22) et/ou de la deuxième pièce de ferrure (24) qui entoure une face supérieure (64) de la pièce de ferrure (22, 24) fond au moins par endroits et s'assemble au moins avec la matière du premier panneau de recouvrement (16) concerné.
